# EUROPEAN PATENT APPLICATION

(11) **EP 4 576 699 A1**
(43) Date of publication of application: **25.06.2025**
(21) Application number: 23869784.1
(22) Date of filing: 27.06.2023
(51) Int. Cl.: H04L 41/082, G06F 9/445

(54) **SOFTWARE UPGRADING METHOD, RELATED DEVICE, AND NETWORK**

(30) Priority: 28.09.2022 CN 202211191982
(71) Applicant: Huawei Technologies Co., Ltd., Shenzhen, Guangdong 518129 (CN)
(72) Inventor: YU, Naishen, Shenzhen, Guangdong 518129 (CN); CHEN, Shaoyong, Shenzhen, Guangdong 518129 (CN)
(74) Representative: Maiwald GmbH
(86) International application number: PCT/CN2023/102683
(87) International publication number: WO 2024/066536

(57) **Abstract**

Embodiments of this application disclose a software upgrade method, a related device, and a network, to maintain interaction with an optical network unit in a process of a software upgrade. **In** this way, service interruption is avoided. The software upgrade method provided in embodiments of this application is applied to the optical network unit. Software and a chip run on the optical network unit, and the software indicates the chip to implement interaction with a terminal device. The software upgrade method includes: The optical network unit receives a first message, where the first message indicates the optical network unit to perform a hot reset upgrade on the software; and performs the hot reset upgrade on the software based on the first message, and maintains the interaction between the chip and the terminal device before completing the hot reset upgrade on the software.

## Description

This application claims priority to Chinese Patent Application No. 202211191982.8, filed with the China National Intellectual Property Administration on September 28, 2022 and entitled "SOFTWARE UPGRADE METHOD, RELATED DEVICE, AND NETWORK", which is incorporated herein by reference in its entirety.

### TECHNICAL FIELD

Embodiments of this application relate to the communication field, and in particular, to a software upgrade method, a related device, and a network.

### BACKGROUND

In an optical communication network, an optical network unit (optical network unit, ONU) is configured to provide services for a terminal device. Specifically, service software runs on the optical network unit, and the service software indicates the optical network unit to exchange messages with the terminal device, to provide the services for the terminal device.

If the service software is upgraded, the service software needs to be reset. However, the software reset usually needs to take dozens of seconds or even several minutes. In the reset process, the service software cannot run. Consequently, service interruption occurs during the dozens of seconds or even the several minutes.

### SUMMARY

Embodiments of this application provide a software upgrade method, a related device, and a network, to maintain interaction with a terminal device in a process of a software upgrade. In this way, service interruption is avoided.

According to a first aspect, an embodiment of this application provides a software upgrade method. The method is applied to an optical network unit, and the optical network unit is configured to interact with a terminal device, to provide a service for the terminal device. Specifically, software and a chip run on the optical network unit, and the software indicates the chip to implement interaction with the terminal device (for example, the software plays a configuration management role for the interaction between the chip and the terminal device). The software upgrade method includes: The optical network unit receives a first message, where the first message indicates the optical network unit to perform a hot reset upgrade on the software. The optical network unit performs the hot reset upgrade on the software based on the first message, and maintains the interaction between the chip and the terminal device before completing the hot reset upgrade on the software.

In this embodiment of this application, the first message indicates the optical network unit to perform the hot reset upgrade, so that in a process of the reset upgrade on the software, the software upgrade is decoupled from forwarding by the chip. In a process of the software upgrade, the chip still maintains service packet exchange with the terminal device. In this way, it is ensured that a service of the terminal device is not affected in the process of the reset upgrade on the software.

Optionally, the service of the terminal device is implemented through packet exchange between the terminal device and an access device, and the chip may be configured to implement packet forwarding between the access device and the terminal device. Therefore, the optical network unit may further maintain interaction between the chip and the access device before completing the hot reset upgrade on the software. In this way, in the process of the hot reset upgrade, it is ensured that the packet forwarding between the access device and the terminal device is not interrupted, that is, it can be ensured that the service is not interrupted.

In an optional implementation, the first message includes an upgrade manner field, and the upgrade manner field indicates that an upgrade manner is hot reset upgrade.

In an optional implementation, after completing the hot reset upgrade on the software, the optical network unit may further send a second message, where the second message indicates a hot reset upgrade result of the software.

In this embodiment of this application, the second message indicates the hot reset upgrade result of the software, so that a network (for example, the access device) can learn of progress of performing the hot reset upgrade on the software by the optical network unit (the progress is specifically indicated as whether the upgrade is completed). In this way, management of a status of the optical network unit is facilitated.

In an optional implementation, the second message includes a message identifier field and an upgrade result field. The message identifier field indicates the hot reset upgrade result of the software. A first value of the upgrade result field indicates that the hot reset upgrade result of the software is success, and a second value of the upgrade result field indicates that the hot reset upgrade result of the software is failure.

In this embodiment of this application, the upgrade result field in the second message indicates the hot reset upgrade result (success or failure) of the software. If the upgrade result is success, the network (for example, the access device) may continue to perform a next operation (for example, hot configuration restoration). If the upgrade result is failure, the network (for example, the access device) may indicate the optical network unit to perform the hot reset upgrade again until the upgrade is successful. In this way, reliability of the hot reset upgrade is ensured. If the upgrade result is failure, the procedure may alternatively be ended, and a cold reset upgrade may be subsequently performed, an upgrade may be not performed, or the like. This is not limited in this application.

In an optional implementation, after completing the hot reset upgrade on the software, the optical network unit may further receive a third message, where the third message indicates the optical network unit to enter a hot configuration restoration state. In the hot configuration restoration state, the optical network unit stops sending configuration data from the access device to the chip.

In this embodiment of this application, configuration restoration on the software is decoupled from a configuration change on the chip. Before the hot configuration restoration on the software is completed, a configuration of the chip is maintained as a state existing before the software upgrade. In a process of the hot configuration restoration on the software, configuration data before the software upgrade is not delivered to the chip, to avoid service interruption. In other words, through the hot configuration restoration on the software, a configuration status of the chip is not changed while a status of the software is restored, and the chip may still interact with the terminal device, to ensure that the service is not interrupted in a process of the configuration restoration.

In an optional implementation, the third message includes a configuration manner field and a configuration status field. The configuration manner field indicates the hot configuration restoration state. The configuration status field in the third message is a third value, and the third value of the configuration status field indicates the optical network unit to enter the hot configuration restoration state.

In an optional implementation, after receiving the third message, the optical network unit may further receive a fourth message. The fourth message indicates the optical network unit to end the hot configuration restoration state. Then, the optical network unit may end the hot configuration restoration state based on the fourth message.

In this embodiment of this application, the fourth message indicates the ONU to end the hot configuration restoration state. In other words, the fourth message indicates that configurations of the software and the chip on the ONU are consistent, and both are configurations before the software upgrade.

In an optional implementation, the fourth message includes a configuration manner field and a configuration status field. The configuration manner field indicates the hot configuration restoration state. The configuration status field in the fourth message is a fourth value, and the fourth value of the configuration status field indicates the optical network unit to end the hot configuration restoration state.

In an optional implementation, after ending the hot configuration restoration state, the optical network unit may further send the configuration data from the access device to the chip.

In this embodiment of this application, after ending the hot configuration restoration state, the optical network unit may deliver the configuration data to the chip, to implement a synchronous configuration change of the software and the chip.

In an optional implementation, after receiving the fourth message, the optical network unit may further receive incremental configuration data, and send the incremental configuration data to the chip. The incremental configuration data is configuration data cached by the access device in the process of the hot reset upgrade on the software by the optical network unit.

In this embodiment of this application, in the process of the hot reset upgrade on the software by the optical network unit, the access device caches configuration data (configuration data in a configuration change request) from the network, and the cached configuration data is referred to as incremental configuration data. After the optical network unit completes the hot configuration restoration, the access device delivers the incremental configuration data to the optical network unit, and transfers a configuration change from the network to (the software and chip of) the optical network unit in a timely manner, to quickly implement the configuration change.

In an optional implementation, before performing the hot reset upgrade on the software based on the first message, the optical network unit may further send target data to a storage module, where the target data is data used before the optical network unit performs the hot reset upgrade on the software. Before receiving the fourth message, the optical network unit may receive the target data from the storage module, and run, based on the target data, hot-reset upgraded software.

In this embodiment of this application, the target data is stored in the storage module before the hot reset upgrade, and the target data is then obtained from the storage module before the fourth message is received (in other words, before the hot configuration restoration is completed). This can prevent the target data from being lost in a process of the hot reset upgrade and the hot configuration restoration, to ensure normal running of the upgraded software and the chip.

In an optional implementation, the optical network unit may further receive a software package from the access device. In addition, patch data is obtained from the software package based on the first message, and a patch upgrade is performed on the chip based on the patch data.

In this embodiment of this application, the patch upgrade is performed on the chip based on the patch data. The patch upgrade does not affect the interaction between the chip and the terminal device, and it can be ensured that the service is not interrupted in a process of a chip upgrade (patch upgrade).

In an optional implementation, the terminal device is a user terminal.

In this embodiment of this application, through the hot reset upgrade on the ONU, the service of the user terminal is not interrupted in a process of the software upgrade of the ONU.

According to a second aspect, an embodiment of this application provides a software upgrade method, where the method is applied to an access device, and the method includes: The access device sends a first message to an optical network unit, where the first message indicates the optical network unit to perform a hot reset upgrade on software. The software and a chip run on the optical network unit, and the software indicates the chip to implement interaction with a terminal device. The optical network unit maintains the interaction between the chip and the terminal device before completing the hot reset upgrade on the software.

In an optional implementation, the first message includes an upgrade manner field, and the upgrade manner field indicates that an upgrade manner is hot reset upgrade.

In an optional implementation, after sending the first message to the optical network unit, the access device may further receive a second message from the optical network unit, where the second message indicates a hot reset upgrade result of the software.

In an optional implementation, the second message includes a message identifier field and an upgrade result field. The message identifier field indicates the hot reset upgrade result of the software. A first value of the upgrade result field indicates that the hot reset upgrade result of the software is success, and a second value of the upgrade result field indicates that the hot reset upgrade result of the software is failure.

In an optional implementation, an upper-layer device may further send a third message to the optical network unit based on the second message. The third message indicates the optical network unit to enter a hot configuration restoration state. In the hot configuration restoration state, the optical network unit stops sending configuration data from the access device to the chip.

In an optional implementation, the third message includes a configuration manner field and a configuration status field. The configuration manner field indicates the hot configuration restoration state. The configuration status field in the third message is a third value, and the third value of the configuration status field indicates the optical network unit to enter the hot configuration restoration state.

In an optional implementation, after sending the third message to the optical network unit, the access device may further send a fourth message to the optical network unit, where the fourth message indicates the optical network unit to end the hot configuration restoration state.

In an optional implementation, the fourth message includes a configuration manner field and a configuration status field. The configuration manner field indicates the hot configuration restoration state. The configuration status field in the fourth message is a fourth value, and the fourth value of the configuration status field indicates the optical network unit to end the hot configuration restoration state.

In an optional implementation, after sending the first message to the optical network unit, the access device may further cache incremental configuration data. The incremental configuration data is configuration data delivered by a network in a process of the hot reset upgrade on the software by the optical network unit. After sending the fourth message to the optical network unit, the access device may further send the incremental configuration data to the optical network unit.

In an optional implementation, after sending the first message to the optical network unit and before sending the fourth message to the optical network unit, the access device may further lock a configuration. In other words, if receiving a configuration change request from a control module, the access device returns an error prompt to the control module, where the error prompt indicates that the access device refuses to perform a configuration change.

In an optional implementation, after sending the fourth message to the optical network unit, the access device may end locking the configuration. In other words, if receiving the configuration change request from the control module, the access device may perform the configuration change.

In an optional implementation, the access device may further send a software package to the optical network unit, where the software package includes patch data, and the patch data is used to perform a patch upgrade on the chip.

For beneficial effects of the second aspect, refer to the first aspect. Details are not described herein again.

According to a third aspect, an embodiment of this application provides an optical network unit, where the optical network unit includes a processor and a chip. The processor is configured to run software, where the software indicates the chip to implement interaction with a terminal device. The optical network unit is configured to perform the method according to the first aspect.

According to a fourth aspect, an embodiment of this application provides an access device, where the access device includes a processor and a memory. The processor is configured to perform the method according to the second aspect.

According to a fifth aspect, an embodiment of this application provides a communication network, where the communication network includes the optical network unit according to the third aspect and the access device according to the fourth aspect.

According to a sixth aspect, an embodiment of this application provides a computer-readable storage medium, where the computer-readable storage medium stores a program; and when a computer executes the program, the method according to the first aspect or the second aspect is performed.

According to a seventh aspect, an embodiment of this application provides a computer program product, where when the computer program product is executed on a computer, the computer performs the method according to the first aspect or the second aspect.

Optionally, the computer may be an optical network unit or an access device. This is not limited in this application.

### BRIEF DESCRIPTION OF DRAWINGS

FIG. 1 is a diagram of a network architecture according to this application;
FIG. 2 is a diagram of a passive optical network architecture according to this application;
FIG. 3 is a schematic flowchart of a software upgrade method according to an embodiment of this application;
FIG. 4 is a diagram of a packet structure of a first message according to an embodiment of this application;
FIG. 5 is a schematic flowchart of a software upgrade method including hot configuration restoration according to an embodiment of this application;
FIG. 6 is a schematic flowchart of caching a configuration in a software upgrade method according to an embodiment of this application;
FIG. 7 is a diagram of a structure of an optical network unit according to an embodiment of this application; and
FIG. 8 is a diagram of a structure of an access device according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variants are intended to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

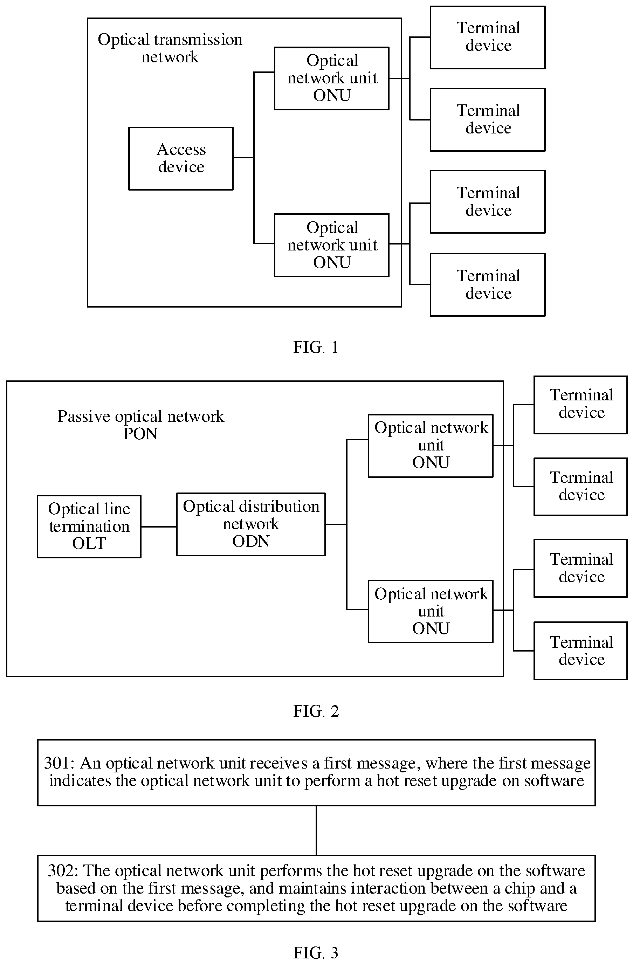

FIG. 1 is a diagram of a network architecture according to this application. As shown in FIG. 1, an optical transmission network includes an access device and an optical network unit. The optical network unit is configured to interact with a terminal device, to provide a service for the terminal device. The access device may interact with the optical network unit to perform control, an upgrade, and the like on the optical network unit.

Optionally, transmission of an optical signal may be performed between the access device and the optical network unit. The optical network unit may convert the optical signal into an electrical signal, and interact with the terminal device over the electrical signal (for example, in a manner of wired transmission, wireless transmission, or the like). Optionally, the access device in FIG. 1 may be an OLT, a master gateway (master ONU) in a fiber to the room (fiber to the room, FTTR) scenario, or the like. The optical network unit is an ONU. The terminal device may be a mobile phone, a computer, a set-top box, or the like. The optical transmission network may be a passive optical network (Passive Optical Network, PON) or the like. This is not limited in this application.

Optionally, as shown in FIG. 2, if the optical transmission network is the passive optical network PON, an access device in the PON may be an optical line termination (optical line termination, OLT). Optionally, in the PON, an ONU and the OLT may be connected over an optical distribution network (optical distribution network, ODN) to perform transmission of an optical signal.

In the optical transmission network, the optical network unit interacts with the terminal device to provide the service for the terminal device. Specifically, service software runs on the optical network unit ONU, and the service software is used to implement interaction between the optical network unit and the terminal device, to provide the service for the terminal device.

If the service software is to be upgraded, a new software package is loaded on the optical network unit. After loading of the software package is completed, the service software is reset to upgrade the service software. However, the reset of the service software usually needs to take dozens of seconds or even several minutes. In the reset process, the service software cannot run, and the optical network unit cannot interact with the terminal device. The reset of the service software causes interruption of a service of the terminal device.

To remedy the foregoing defects, embodiments of this application provide a software upgrade method, and a related device and network, to maintain interaction between the access device and the optical network unit in a process of the software upgrade. In this way, the service interruption is avoided.

FIG. 3 is a schematic flowchart of a software upgrade method according to an embodiment of this application. The method is applied to an optical network unit ONU. In embodiments of this application, software and a chip run on the optical network unit. The chip is configured to implement interaction with a terminal device. The software is the foregoing service software, and is used to configure and manage the interaction between the chip and the terminal device, to provide services for the terminal device. Refer to FIG. 3. A procedure of the software upgrade method provided in this embodiment of this application includes the following steps.

301: The optical network unit receives a first message, where the first message indicates the optical network unit to perform a hot reset upgrade on the software.

If a software upgrade needs to be performed on the optical network unit ONU, an upper-layer network (for example, the access device in FIG. 1) of the optical network unit may send the first message to the optical network unit. The first message indicates the optical network unit to perform the hot reset upgrade on the software. In this embodiment of this application, the hot reset upgrade is defined as an in-service upgrade (in-service software upgrade, ISSU). In other words, in a process of the reset upgrade on the software, interaction between the optical network unit and the terminal device is not interrupted.

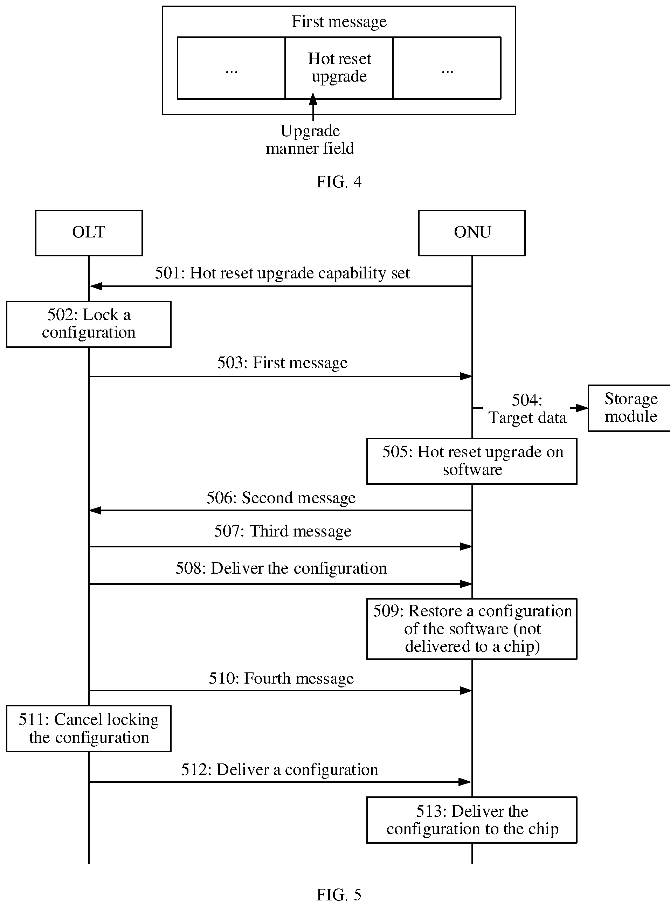

Optionally, a frame structure of the first message may be shown in FIG. 4. The first message includes an upgrade manner field. The upgrade manner field in the first message indicates the hot reset upgrade, to indicate the optical network unit to perform the hot reset upgrade.

Optionally, the optical network unit may receive the first message from an upper-layer device OLT, or may receive the first message in another manner, for example, receive the first message through a USB interface on the optical network unit. This is not limited in this application.

302: The optical network unit performs the hot reset upgrade on the software based on the first message, and maintains the interaction between the chip and the terminal device before completing the hot reset upgrade on the software.

The optical network unit performs the hot reset upgrade (namely, the ISSU) on the software based on the first message. Specifically, in a process of the hot reset upgrade on the software (in other words, before the hot reset upgrade on the software is completed), the interaction between the chip and the terminal device is maintained.

In this embodiment of this application, software reset is decoupled from forwarding of the chip, and the software reset does not affect forwarding of the chip, so that the interaction between the chip and the terminal device is maintained in the process of the reset upgrade on the software. In this way, service interruption caused by the reset upgrade on the software is avoided.

In embodiments of this application, "interaction" refers to "a state for allowing a service packet to be forwarded between the optical network unit and the terminal device". In the process of the hot reset upgrade, a service packet that needs to be transmitted does not necessarily exist between the optical network unit and the terminal device. Therefore, in the process of the hot reset upgrade, the service packet is not necessarily forwarded between the optical network unit and the terminal device. In this embodiment of this application, maintaining the interaction between the chip and the terminal device means that if a service packet needs to be forwarded between the optical network unit and the terminal device, the packet is forwarded between the chip and the terminal device, and forwarding of the service packet between the chip and the terminal device is not interrupted due to the reset upgrade on the software.

For example, if the terminal device is a set-top box, and the optical network unit ONU is delivering first video data to the set-top box, the chip in the ONU delivers, to the set-top box based on an indication of the software, a service packet including the first video data. If the ONU receives the first message in a process of delivering the service packet, before the reset upgrade on the software is completed, the chip continues to deliver, to the set-top box, the service packet including the first video data. In this way, it is ensured that a service of the set-top box is not affected in the process of the reset upgrade on the software.

In this embodiment of this application, the first message indicates the optical network unit to perform the hot reset upgrade, so that in the process of the reset upgrade on the software, the software upgrade is decoupled from forwarding by the chip. In a process of the software upgrade, the chip still maintains service packet exchange with the terminal device. In this way, it is ensured that a service of the terminal device is not affected in the process of the reset upgrade on the software.

Optionally, the service of the terminal device may be implemented through packet exchange between the terminal device and the access device, and the chip may be configured to implement packet forwarding between the access device and the terminal device. Therefore, the optical network unit may further maintain the interaction between the chip and the access device before completing the hot reset upgrade on the software. In this way, in the process of the hot reset upgrade, it is ensured that the packet forwarding between the access device and the terminal device is not interrupted, that is, it can be ensured that the service is not interrupted.

In this embodiment of this application, the first message indicates to perform the hot reset upgrade on the software on the optical network unit. In addition to performing the hot reset upgrade, an embodiment of this application further provides a solution. In this solution, on a basis of performing the hot reset upgrade, a configuration of the software may be further restored to a state existing before the reset upgrade, so that states before and after the upgrade are consistent, and a possibility of a service error is reduced. This is referred to as hot configuration restoration in embodiments of this application.

The following uses an example in which an OLT is used as an access device to describe a procedure of a method for performing the hot configuration restoration. Optionally, the access device may be a master gateway (master ONU) in an FTTR scenario, or the like. This is not limited in this application. As shown in FIG. 5, the method includes the following steps.

501: An ONU sends a hot reset upgrade capability set to the OLT.

In a process in which the ONU goes online, the ONU may send the hot reset upgrade capability set to the OLT. In embodiments of this application, the hot reset upgrade capability set indicates that the access device has a hot reset upgrade (namely, ISSU) capability. The OLT receives the hot reset capability set from the ONU, so that the OLT can determine that the ONU has the hot reset upgrade capability. In this way, the OLT indicates the ONU to perform a hot reset upgrade when the ONU needs to be upgraded.

Optionally, the optical network unit ONU may send the hot reset upgrade capability set to the access device when going online, or may send the hot reset upgrade capability set to the access device at any time before or after going online. This is not limited in this application.

502: The OLT locks a configuration.

If the OLT determines to perform the hot reset upgrade on software of the ONU, the OLT locks the configuration of the ONU before the ONU completes the hot reset upgrade on the software. Specifically, before the ONU completes the hot reset upgrade on the software (that is, before step 506), if the OLT receives a configuration change request from a control module, the OLT returns an error prompt to the control module, where the error prompt indicates the OLT to refuse to perform a configuration change.

In this embodiment of this application, the configuration may include configurations of virtual local area network (virtual local area network, VLAN) switching, a priority of a packet in a queue, a carrier (transmission container, T-CONT) that carries a service in an upstream direction of a gigabit-capable Ethernet passive optical network (gigabit-capable PON, GPON), and the like. This is not limited in this application.

Optionally, the control module may be a network side interface, a command line configuration interface, or the like on the OLT. This is not limited in this application.

503: The OLT sends a first message to the ONU.

The OLT sends the first message to the ONU, to indicate the ONU to perform the hot reset upgrade. For details of this step, refer to step 301 in the embodiment shown in FIG. 3. Details are not described herein again.

Optionally, the first message may be a physical layer operations, administration, and maintenance (physical layer operations, administration, and maintenance, PLOAM) message. A specific packet structure is shown in Table 1.

**Table 1 Packet format of the first message in a PLOAM format**

| **First message (message of the OLT for notifying the ONU to perform the hot reset upgrade)** | | |
|---|---|---|
| Octet | Content | Description |
| 1 | ONU-ID | ONU ID of the target ONU |
| 2 | x | Message identifier, indicating that the message is used by the OLT to notify the ONU to perform the hot reset upgrade |
| 3-12 | Unspecified | |

The octet 1 indicates the identity (identity document, ID) of the target ONU that is to perform the reset upgrade. Optionally, the ID of the ONU may indicate the target ONU that is to perform the reset upgrade, or a serial number (serial number, SN) or the like may perform the indication as well. This is not limited in this application.

The octet 2 is the upgrade manner field shown in FIG. 4, and is used by the OLT to notify the ONU to perform the hot reset upgrade. Optionally, the field may be used as the message identifier of the first message. In Table 1, a value of the message identifier (the upgrade manner field) may be 0, 1, or any other value. This is not limited in this application. For example, 0 may indicate a cold reset upgrade (namely, a manner of upgrading with interrupting a service), and 1 may indicate the hot reset upgrade (namely, an upgrade manner of the hot reset upgrade according to embodiments of this application).

504: The ONU sends target data to a storage module.

The ONU sends the target data to the storage module, where the target data is data used before the ONU performs the hot reset upgrade on the software, so that the target information is restored after the hot reset upgrade is completed, and upgraded software can continue to run based on the target data before the upgrade.

For example, the target data may include data, such as a MAC address entry and an entry of a multicast program of the optical network unit, generated during interaction with the terminal device. This is not limited in this application.

Optionally, the storage module may be a storage device outside the ONU, or may be a module inside the ONU. This is not limited in this application.

Optionally, the storage module may be a high-end memory, a flash memory (flash EEPROM memory, flash), or the like. This is not limited in this application.

505: The ONU performs the hot reset upgrade on the software.

Specifically, before step 503, the OLT may send a new software package to the ONU. After receiving the software package, the ONU may load the software package and perform software reset after loading the software package. When the software reset is completed, the hot reset upgrade on the software is completed. It should be noted that, same as step 302 shown in FIG. 3, in a process of the hot reset upgrade on the software, the ONU maintains interaction between a chip and the optical network unit, to ensure that a service is not interrupted.

Optionally, the OLT may send the software package to the ONU before step 502, in other words, send the software package before locking the configuration, to reduce duration of locking the configuration and implement timely response to the configuration change.

Optionally, the software package may include patch data. The patch data is used to perform a patch upgrade on the chip, to upgrade the chip without interrupting the interaction between the chip and the optical network unit. Specifically, after the ONU receives the first message (that is, after step 503), the ONU may obtain the patch data from the software package, and perform the patch upgrade on the chip based on the patch data.

Optionally, the ONU may perform the patch upgrade before the ONU performs the hot reset upgrade (that is, before step 505). Compared with the software upgrade, the patch upgrade on the chip is at a lower layer. Therefore, the chip (at a bottom layer) is upgraded before the software (at an upper layer), so that service interruption caused by a software or chip running problem can be avoided.

Optionally, the new software package may be sent in a packet such as an OMCI packet. Optionally, the software package may alternatively be obtained in another manner, for example, may be obtained through an interface such as a universal serial bus (universal serial bus, USB) interface on the ONU. This is not limited in this application.

Optionally, if the ONU obtains the new software package through a non-network-side interface such as the USB interface, before step 502, the ONU may send a notification message to the OLT, where the notification message indicates to the OLT that the ONU performs the hot reset upgrade, so that steps 502 to 505 are performed.

Optionally, the notification message may include the ID of the ONU, an event identifier, and the like. This is not limited in this application.

506: The ONU sends a second message to the OLT.

After completing the hot reset upgrade (in other words, after reset of new software is completed), the ONU may send the second message to the OLT, where the second message indicates a hot reset upgrade result of the software. Optionally, the second message may include a message identifier field and an upgrade result field. The message identifier field indicates the hot reset upgrade result of the software, and the upgrade result field indicates whether the hot reset upgrade result of the software is success or failure.

Optionally, the second message may be a PLOAM message, and a specific packet structure is shown in Table 2.

**Table 2 Packet format of the second message in a PLOAM format**

| **Second message (message of the ONU for notifying the OLT that the hot reset upgrade is completed)** | | |
|---|---|---|
| Octet | Content | Description |
| 1 | ONU-ID | ONU ID of the target ONU |
| 2 | x | Message identifier, indicating that the message is used by the ONU to notify the OLT of the hot reset upgrade result |
| 3 | x | Hot reset upgrade result notified by the ONU to the OLT, where 0 indicates success, and another value indicates failure |
| 4-12 | Unspecified | |

The octet 1 indicates the ID of the ONU that performs the hot reset upgrade. Optionally, the ID of the ONU may indicate the target ONU that performs the hot reset upgrade, or an SN or the like may perform the indication as well. This is not limited in this application.

The octet 2 is the foregoing message identifier field, and indicates the hot reset upgrade result of the software, in other words, indicates that the message (the second message) indicates the hot reset upgrade result of the software. In Table 2, a value of the message identifier field may be 0, 1, or any other value. This is not limited in this application. For example, 1 may indicate that the hot reset upgrade is completed.

The octet 3 is the foregoing upgrade result field. For example, 0 may indicate that the hot reset upgrade result of the software is success, and another value may indicate that the hot reset upgrade result of the software is failure. The hot reset upgrade result may be indicated in the foregoing indication manner, or may alternatively be indicated in another manner. For example, 1 indicates that the upgrade is successful, and 0 indicates that the upgrade fails. This is not limited in this application.

Optionally, if the upgrade result is success, a network (for example, the access device) may continue to perform a next operation (for example, hot configuration restoration). If the upgrade result field indicates that the upgrade result is failure, the hot reset upgrade may be performed on the software again, in other words, steps 503 to 506 are performed again until the upgrade result field indicates that the upgrade result is success. In this way, reliability of the hot reset upgrade is ensured. If the upgrade result is failure, the procedure may alternatively be ended, and a cold reset upgrade may be subsequently performed, an upgrade may be not performed, or the like. This is not limited in this application.

507: The OLT sends a third message to the ONU.

After receiving the second message and determining that the upgrade result is success, the OLT can determine that the hot reset upgrade on the software on the ONU is successfully completed. To unify running statuses of the software and the chip, after the hot reset upgrade is successfully completed, the OLT indicates the ONU to perform hot configuration restoration on the software, to restore a configuration of the software to a state existing before the hot reset upgrade.

Specifically, after determining that the upgrade result is success, the OLT may send the third message to the ONU, to indicate the ONU to enter a hot configuration restoration state. In embodiments of this application, the hot configuration restoration is defined as in-service configuration restoration. In other words, in a process of the configuration restoration on the software, interaction between the access device and the terminal device is not interrupted.

In the hot configuration restoration state, the ONU stops sending configuration data from an upper-layer device to the chip. In other words, the chip interacts with the optical network unit in a configuration status existing before the software upgrade (that is, before step 502), and the configuration restoration on the software does not affect the interaction between the chip and the terminal device.

The third message indicates the ONU to enter the hot configuration restoration state. Optionally, the third message may include a configuration manner field and a configuration status field. The configuration manner field indicates the hot configuration restoration state, and the configuration status field indicates the ONU to enter or end the hot configuration restoration state. Specifically, in the third message, the configuration status field indicates the ONU to enter the hot configuration restoration state.

Optionally, the third message may be a PLOAM message. A specific packet structure is shown in Table 3.

**Table 3 Packet format of the third message/a fourth message in a PLOAM format**

| **Third message/Fourth message (message of the OLT for notifying the ONU of the hot configuration restoration state)** | | |
|---|---|---|
| Octet | Content | Description |
| 1 | ONU-ID | ONU ID of the target ONU |
| 2 | x | Message identifier, indicating that the message is used by the OLT to notify the ONU of the hot configuration restoration state |
| 3 | x | 1 indicates that the hot configuration restoration starts, and 0 indicates that the hot configuration restoration ends |
| 4-12 | Unspecified | |

The octet 1 indicates the ID of the target ONU that is to perform the hot configuration restoration. Optionally, the ID of the ONU may indicate the target ONU that is to perform the hot configuration restoration, or an SN or the like may perform the indication as well. This is not limited in this application.

The octet 2 is the foregoing configuration manner field, and indicates the hot configuration restoration state. Optionally, the field may be used as the message identifier of the third message. In Table 3, a value of the message identifier (the configuration manner field) may be 0, 1, or any value. This is not limited in this application. For example, 1 may indicate the hot configuration restoration state.

The octet 3 is the foregoing configuration status field. For example, 1 may indicate that the hot configuration restoration starts, in other words, indicate the ONU to enter the hot configuration restoration state; and 0 may indicate that the hot configuration restoration ends, in other words, indicate the ONU to end the hot configuration restoration state. A configuration status may be indicated in the foregoing indication manner, or may alternatively be indicated in another manner. For example, 0 indicates that the hot configuration restoration starts, and 1 indicates that the hot configuration restoration ends. This is not limited in this application.

508: The OLT delivers the configuration to the ONU.

In step 507, the OLT sends the third message to the ONU, to indicate the ONU to start the hot configuration restoration. After step 507, the OLT may deliver the configuration to the ONU, where the delivered configuration is the configuration used before the reset upgrade on the software.

Optionally, delivering the configuration may be implemented through a packet such as the OMCI packet. This is not limited in this application.

509: The ONU restores the configuration of the software (not delivered to the chip).

The hot configuration restoration is to restore the upgraded software to the configuration status existing before the upgrade, while the chip always interacts with the terminal device in a state existing before the software upgrade. Therefore, to ensure that the service is not interrupted, the ONU does not need to deliver the configuration data to the chip in the hot configuration restoration state.

510: The OLT sends the fourth message to the ONU.

After delivering all configuration data before the software upgrade to the ONU, the OLT may send the fourth message to the ONU, to indicate the ONU to end the hot configuration restoration state. The ONU may end the hot configuration restoration state based on the fourth message. After the hot configuration restoration state ends, configurations of the software and the chip on the ONU are consistent, and both are configurations before the software upgrade.

The fourth message indicates the ONU to end the hot configuration restoration state. Optionally, the fourth message may include a configuration manner field and a configuration status field. The configuration manner field indicates the hot configuration restoration state, and the configuration status field in the fourth message indicates the ONU to end the hot configuration restoration state.

Optionally, the fourth message may be a PLOAM message. For a specific packet structure, refer to Table 3 and descriptions in Table 3. Details are not described herein again.

Optionally, after completing the hot reset upgrade on the software, the ONU may restore the target data from the storage module. In other words, after sending the second message, the ONU may obtain the target data (namely, the target data sent to the storage module in step 504) from the storage module. Then, the ONU may run, based on the target data, the hot-reset upgraded software.

Optionally, a step of restoring the target data may be performed at any moment after step 505 and before step 510. This is not limited in this application.

511: The OLT cancels locking the configuration.

After the fourth message is received, the OLT can determine that the hot configuration restoration on the software on the ONU is completed. Therefore, the OLT may cancel locking the configuration of the ONU.

512: The OLT delivers a configuration to the ONU.

After the hot configuration restoration state ends, the OLT cancels locking the configuration of the ONU. Therefore, the OLT may deliver a configuration change request from the control module to the ONU.

513: The ONU delivers the configuration to the chip.

The ONU may change a configuration of the upgraded software based on the configuration change request, and deliver the changed configuration to the chip, to synchronize configuration statuses of the software and the chip.

In this embodiment of this application, configuration restoration on the software is decoupled from a configuration change on the chip. Before the hot configuration restoration on the software is completed, the configuration of the chip is maintained as the state existing before the software upgrade. In a process of the hot configuration restoration on the software, the configuration data before the software upgrade is not delivered to the chip, to avoid service interruption. In other words, through the hot configuration restoration on the software, the configuration status of the chip is not changed while the status of the software is restored, and the chip may still interact with the terminal device, to ensure that the service is not interrupted in the process of the configuration restoration.

In the embodiment shown in FIG. 5, in a process of the hot reset upgrade and the hot configuration restoration on the software, the configuration of the ONU is locked for an upper-layer network (that is, the foregoing control module), to ensure that the configuration statuses of the software and the chip after the hot configuration restoration are consistent. Optionally, the configuration may be locked, or a configuration change in the process of the hot reset upgrade and the hot configuration restoration may be cached, and a unified configuration change is performed on the software and the chip after the hot configuration restoration is completed, to quickly respond to the configuration change performed by the control module on the ONU.

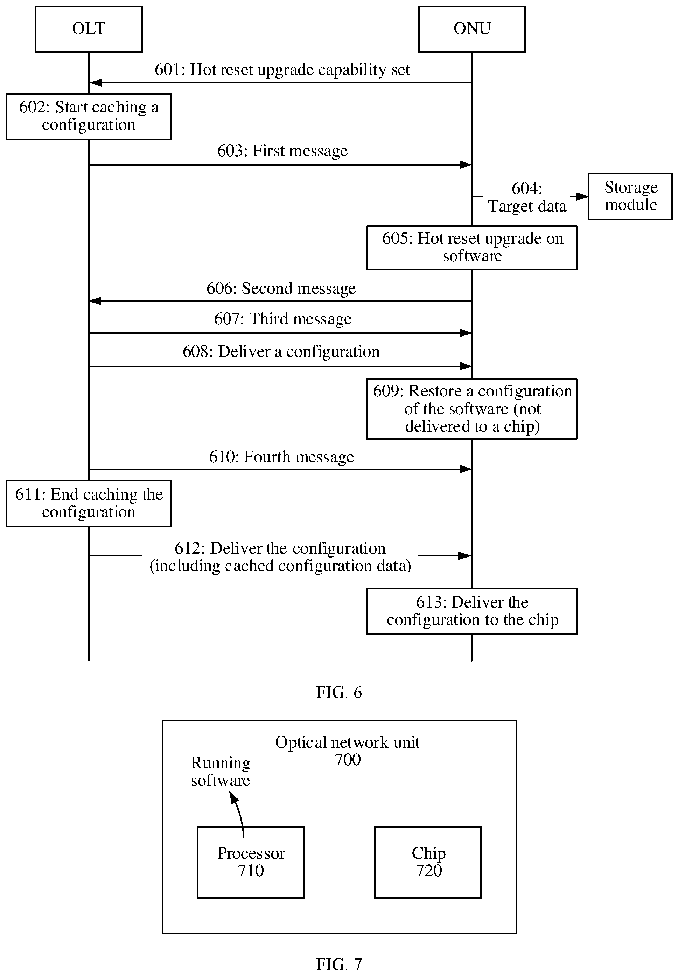

The following uses an example in which an OLT is used as an access device to describe a procedure of a method for performing the hot configuration restoration. Optionally, the access device may be a master gateway (master ONU) in an FTTR scenario, or the like. This is not limited in this application. As shown in FIG. 6, a procedure of caching a configuration change in a hot reset upgrade and hot configuration restoration includes the following steps.

601: An ONU sends a hot reset upgrade capability set to the OLT.

For step 601, refer to step 501 in the embodiment shown in FIG. 5. Details are not described herein again.

602: The OLT starts caching a configuration.

If the OLT determines to perform a reset upgrade on software on the ONU, the OLT may start caching the configuration. Specifically, if the OLT receives a configuration change request from a control module, where the request is used to implement a configuration change of the ONU, the OLT may cache configuration data, and after the ONU completes the hot reset upgrade and the hot configuration restoration, deliver the cached configuration data to the ONU, to implement the configuration change of the ONU. In this embodiment of this application, the configuration data cached in the OLT is referred to as incremental configuration data. The incremental configuration data is configuration data delivered by a network in a process of the hot reset upgrade on the software by the ONU.

Optionally, the control module may be a network side interface, a command line configuration interface, or the like on the OLT. This is not limited in this application.

603: The OLT sends a first message to the ONU.

604: The ONU sends target data to a storage module.

605: The ONU performs the hot reset upgrade on the software.

606: The ONU sends a second message to the OLT.

607: The OLT sends a third message to the ONU.

608: The OLT delivers a configuration to the ONU.

609: The ONU restores a configuration of the software (not delivered to a chip).

610: The OLT sends a fourth message to the ONU.

For steps 603 to 610, refer to steps 503 to 510 in the embodiment shown in FIG. 5. Details are not described herein again.

611: The OLT ends caching the configuration.

After the fourth message is received, the OLT can determine that the hot configuration restoration on the software on the ONU is completed. Therefore, the OLT may end caching the configuration. Specifically, the OLT may deliver the cached configuration data to the ONU (for details, refer to step 612). If receiving a configuration change request from the control module after step 611, the OLT does not need to cache the configuration data, and may deliver the configuration change request to the ONU.

612: The OLT delivers the configuration (including the cached configuration data) to the ONU.

After a hot configuration restoration state ends, the OLT cancels caching the configuration of the ONU. Therefore, the OLT may deliver the configuration change request from the control module to the ONU, and deliver the cached configuration data to the ONU.

613: The ONU delivers the configuration to the chip.

For step 613, refer to the descriptions of step 513 in the embodiment shown in FIG. 5. Details are not described herein again.

Optionally, in embodiments of this application, the first message to the fourth message may be in a PLOAM format, or may alternatively be in another packet format, for example, a multi-point control protocol (multi-point control protocol, MPCP) packet format, an operation administration and maintenance (operation administration and maintenance, OAM) packet format, or an optical network unit management and control interface (ONU management and control interface, OMCI) packet format.

For example, if the packet format is the MPCP packet format, a packet structure of the first message may be shown in Table 4.

**Table 4 Packet format of the first message in the MPCP format**

| **First message (message of the OLT for notifying the ONU to perform the hot reset upgrade)** | | |
|---|---|---|
| Octet | Content | Description |
| 1-6 | Destination address | Destination MAC address |
| 7-12 | Source address | Source MAC address |
| 13-14 | Length/Type | An MPCP message type field value is 8808 |
| 15-16 | Opcode | Message identifier, indicating that the message is used by the OLT to notify the ONU to perform the hot reset upgrade |
| 17-20 | TIMESTAMP | Used to synchronize MPCP clocks of the OLT and the ONU |
| 21-60 | Opcode-specific field | Not used, and padded with 0s |
| 61-64 | Frame check sequence | Frame check sequence |

The octets 1 to 6 indicate the destination medium access control (medium access control, MAC) address, namely, a MAC address of the target ONU that is to perform the reset upgrade.

The octets 15 and 16 are the upgrade manner field shown in FIG. 4, and are used by the OLT to notify the ONU to perform the hot reset upgrade. Optionally, the field may be used as the message identifier of the first message. A value of the message identifier (the upgrade manner field) is not limited in this embodiment of this application. For example, 00 may indicate a cold reset upgrade (namely, a manner of upgrading with interrupting a service), and 01 may indicate the hot reset upgrade (namely, an upgrade manner of the hot reset upgrade according to embodiments of this application).

If the packet format is the MPCP packet format, a packet structure of the second message may be shown in Table 5.

**Table 5 Packet format of the second message in the MPCP format**

| **Second message (message of the ONU for notifying the OLT that the hot reset upgrade is completed)** | | |
|---|---|---|
| Octet | Content | Description |
| 1-6 | Destination address | Destination MAC address |
| 7-12 | Source address | Source MAC address |
| 13-14 | Length/Type | An MPCP message type field value is 8808 |
| 15-16 | Opcode | Message identifier, indicating that the message is used by the ONU to notify the OLT of a hot reset upgrade result |
| 17-20 | TIMESTAMP | Used to synchronize the MPCP clocks of the OLT and the ONU |
| 21-60 | Opcode-specific field | The octet 21 indicates the hot reset upgrade result to be notified by the ONU to the OLT, where 0 indicates success, and another value indicates failure; and the octets 22 to 60 are padded with 0s |
| 61-64 | Frame check sequence | Frame check sequence |

For the octets 1 to 6, refer to the descriptions of the first message. Details are not described herein again. The octets 15 and 16 are a message identifier field in the second message, and indicate the hot reset upgrade result of the software, in other words, indicate that the message (the second message) indicates the hot reset upgrade result of the software. In Table 5, a value of the message identifier field may be 00, 01, or any other value. This is not limited in this application. For example, 01 may indicate the hot reset upgrade result.

The octet 21 is the foregoing upgrade result field. For example, 0 may indicate that the hot reset upgrade result of the software is success, and another value may indicate that the hot reset upgrade result of the software is failure. The hot reset upgrade result may be indicated in the foregoing indication manner, or may alternatively be indicated in another manner. For example, 1 indicates that the upgrade is successful, and 0 indicates that the upgrade fails. This is not limited in this application.

If the packet format is the MPCP packet format, a packet structure of the third message/fourth message may be shown in Table 6.

**Table 6 Packet format of the third message/fourth message in the MPCP format**

| **Third message/Fourth message (message of the OLT for notifying the ONU of the hot configuration restoration state)** | | |
|---|---|---|
| Octet | Content | Description |
| 1-6 | Destination address | Destination MAC address |
| 7-12 | Source address | Source MAC address |
| 13-14 | Length/Type | An MPCP message type field value is 8808 |
| 15-16 | Opcode | Message identifier, indicating that the message is used by the OLT to notify the ONU of the hot configuration restoration state |
| 17-20 | TIMESTAMP | Used to synchronize the MPCP clocks of the OLT and the ONU |
| 21-60 | Opcode-specific field | The octet 21 indicates a result that is of setting the hot configuration restoration status and that is notified by the OLT to the ONU, where 1 indicates that the hot configuration restoration starts, and 0 indicates that the hot configuration restoration ends; and the octets 22 to 60 are padded with 0s |
| 61-64 | Frame check sequence | Frame check sequence |

For the octets 1 to 6, refer to the descriptions of the first message. Details are not described herein again. The octets 15 and 16 are a configuration manner field in the third message/fourth message, and indicate the hot configuration restoration state. Optionally, the field may be used as the message identifier of the third message/fourth message. In Table 6, a value of the message identifier (the configuration manner field) may be 00, 01, or any value. This is not limited in this application. For example, 01 may indicate the hot configuration restoration state.

The octet 21 is a configuration status field in the third message/fourth message. For example, 1 may indicate that the hot configuration restoration starts, in other words, indicate the ONU to enter the hot configuration restoration state; and 0 may indicate that the hot configuration restoration ends, in other words, indicate the ONU to end the hot configuration restoration state. The configuration status may be indicated in the foregoing indication manner, or may alternatively be indicated in another manner. For example, 0 indicates that the hot configuration restoration starts, and 1 indicates that the hot configuration restoration ends. This is not limited in this application.

For example, if the packet format is the OAM packet format, a packet structure of the first message may be shown in Table 7.

**Table 7 Packet format of the first message in the OAM format**

| **First message (message of the OLT for notifying the ONU to perform the hot reset upgrade)** | | |
|---|---|---|
| Octet | Content | Description |
| 1-6 | Destination address | Destination MAC address |
| 7-12 | Source address | Source MAC address |
| 13-14 | Length/Type | An OAM message type field value is 8809 |
| 15 | Subtype | OAM message, and padded with 03 |
| 16-17 | Flag | Message event identifier |
| 18 | code | Message identifier, indicating that the message is used by the OLT to notify the ONU to perform the hot reset upgrade |
| 19-60 | Data/PAD | Not used, and padded with 0s |
| 61-64 | Frame check sequence | Frame check sequence |

The octets 1 to 6 indicate the destination medium access control (media access control, MAC) address, namely, the MAC address of the target ONU that is to perform the reset upgrade.

The octet 18 is the upgrade manner field shown in FIG. 4, and is used by the OLT to notify the ONU to perform the hot reset upgrade. Optionally, the field may be used as the message identifier of the first message. A value of the message identifier (the upgrade manner field) is not limited in this embodiment of this application. For example, 0 may indicate a cold reset upgrade (namely, a manner of upgrading with interrupting a service), and 1 may indicate the hot reset upgrade (namely, an upgrade manner of the hot reset upgrade according to embodiments of this application).

If the packet format is the OAM packet format, a packet structure of the second message may be shown in Table 8.

**Table 8 Packet format of the second message in a OAM format**

| **Second message (message of the ONU for notifying the OLT that the hot reset upgrade is completed)** | | |
|---|---|---|
| Octet | Content | Description |
| 1-6 | Destination address | Destination MAC address |
| 7-12 | Source address | Source MAC address |
| 13-14 | Length/Type | An OAM message type field value is 8809 |
| 15 | Subtype | OAM message, and padded with 03 |
| 16-17 | Flag | Message event identifier |
| 18 | code | Message identifier, indicating that the message is used by the ONU to notify the OLT of a hot reset upgrade result |
| 19-60 | Data/PAD | The octet 19 indicates the hot reset upgrade result notified by the OLT to the ONU, where 0 indicates success, and another value indicates failure; and the octets 20 to 60 are padded with 0s |
| 61-64 | Frame check sequence | Frame check sequence |

For the octets 1 to 6, refer to the descriptions of the first message. Details are not described herein again. The octet 18 is a message identifier field in the second message, and indicates the hot reset upgrade result of the software, in other words, indicates that the message (the second message) indicates the hot reset upgrade result of the software. In Table 8, a value of the message identifier field may be 0, 1, or any other value. This is not limited in this application. For example, 0 may indicate that the hot reset upgrade is completed.

The octet 19 is the foregoing upgrade result field. For example, 0 may indicate that the hot reset upgrade result of the software is success, and another value may indicate that the hot reset upgrade result of the software is failure. The hot reset upgrade result may be indicated in the foregoing indication manner, or may alternatively be indicated in another manner. For example, 1 indicates that the upgrade is successful, and 0 indicates that the upgrade fails. This is not limited in this application.

If the packet format is the OAM packet format, a packet structure of the third message/fourth message may be shown in Table 9.

**Table 9 Packet format of the third message/fourth message in the OAM format**

| **Third message/Fourth message (message of the OLT for notifying the ONU of the hot configuration restoration state)** | | |
|---|---|---|
| Octet | Content | Description |
| 1-6 | Destination address | Destination MAC address |
| 7-12 | Source address | Source MAC address |
| 13-14 | Length/Type | An OAM message type field value is 8809 |
| 15 | Subtype | OAM message, and padded with 03 |
| 16-17 | Flag | Message event identifier |
| 18 | code | Message identifier, indicating that the message is used by the OLT to notify the ONU of the hot configuration restoration state |
| 19-60 | Opcode-specific field | The octet 19 indicates the hot reset upgrade result notified by the OLT to the ONU, where 1 indicates that the hot configuration restoration starts, and 0 indicates that the hot configuration restoration ends; and the octets 20 to 60 are padded with 0s |
| 61-64 | Frame check sequence | Frame check sequence |

For the octets 1 to 6, refer to the descriptions of the first message. Details are not described herein again. The octet 18 is a configuration manner field in the third message/fourth message, and indicates the hot configuration restoration state. Optionally, the field may be used as the message identifier of the third message/fourth message. In Table 9, a value of the message identifier (the configuration manner field) may be 0, 1, or any value. This is not limited in this application. For example, 1 may indicate the hot configuration restoration state.

The octet 19 is a configuration status field in the third message/fourth message. For example, 1 may indicate that the hot configuration restoration starts, in other words, indicate the ONU to enter the hot configuration restoration state; and 0 may indicate that the hot configuration restoration ends, in other words, indicate the ONU to end the hot configuration restoration state. The configuration status may be indicated in the foregoing indication manner, or may alternatively be indicated in another manner. For example, 0 indicates that the hot configuration restoration starts, and 1 indicates that the hot configuration restoration ends. This is not limited in this application.

For example, if the packet format is the OMCI packet format, a packet structure of the first message may be shown in Table 10.

**Table 10 Packet format of the first message in the OMCI format**

| **First message (message of the OLT for notifying the ONU to perform the hot reset upgrade) (fixed length)** | | |
|---|---|---|
| Octet | Content | Description |
| 1-2 | Transaction correlation identifier | Message sequence number |
| 3 | Message type | Message type, indicating that the message is used by the OLT to notify the ONU to perform the hot reset upgrade |
| 4 | Device identifier | The fixed length is 0xA |
| 5-6 | Entity Id | Used by the OLT to notify the ONU of an ID of an entity that is to perform the hot reset upgrade |
| 7-8 | Instance Id | Used by the OLT to notify the ONU of an ID of an instance that is of the entity and that is to perform the hot reset upgrade |
| 9-40 | Message contents | Not used, and padded with 0s |
| 41-48 | OMCI trailer | OMCI message trailer |

The octet 3 is the upgrade manner field shown in FIG. 4, and is used by the OLT to notify the ONU to perform the hot reset upgrade. Optionally, the field may be used as a message identifier of the first message. A value of the message identifier (the upgrade manner field) is not limited in this embodiment of this application. For example, 0 may indicate a cold reset upgrade (namely, a manner of upgrading with interrupting a service), and 1 may indicate the hot reset upgrade (namely, an upgrade manner of the hot reset upgrade according to embodiments of this application).

The octets 5 and 6 are used to notify the ONU of the ID of the entity that is to perform the hot reset upgrade, namely, an entity that is in the ONU and that is responsible for performing the upgrade. The octets 7 and 8 are used to notify the ONU of the ID of the instance that is of the entity and that is to perform the hot reset upgrade, namely, an instance that is in the ONU and that is specifically responsible for performing the upgrade.

If the packet format is the OMCI packet format, a packet structure of the second message may be shown in Table 11.

**Table 11 Packet format of the second message in the OMCI format**

| **Second message (message of the ONU for notifying the OLT that the hot reset upgrade is completed) (fixed length)** | | |
|---|---|---|
| Octet | Content | Description |
| 1-2 | Transaction correlation identifier | Message sequence number |
| 3 | Message type | Message type, indicating that the message is used by the ONU to notify the OLT of a hot reset upgrade result |
| 4 | Device identifier | The fixed length is 0xA |
| 5-6 | Entity Id | Used by the OLT to notify the ONU of the ID of the entity that performs the hot reset upgrade |
| 7-8 | Instance Id | Used by the OLT to notify the ONU of the ID of the instance that is of the entity and that performs the hot reset upgrade |
| 9-40 | Message contents | The octet 9 indicates the hot reset upgrade result notified by the OLT to the ONU, where 0 indicates success, and another value indicates failure; and the octets 10 to 40 are padded with 0s |
| 41-48 | OMCI trailer | OMCI message trailer |

The octet 3 is a message identifier field in the second message, and indicates the hot reset upgrade result of the software, in other words, indicates that the message (the second message) indicates the hot reset upgrade result of the software. In Table 11, a value of the message identifier field may be 0, 1, or any other value. This is not limited in this application. For example, 0 may indicate that the hot reset upgrade is completed.

For the octets 5 to 8, refer to descriptions of the first message. Details are not described herein again.

The octet 9 is the foregoing upgrade result field. For example, 0 may indicate that the hot reset upgrade result of the software is success, and another value may indicate that the hot reset upgrade result of the software is failure. The hot reset upgrade result may be indicated in the foregoing indication manner, or may alternatively be indicated in another manner. For example, 1 indicates that the upgrade is successful, and 0 indicates that the upgrade fails. This is not limited in this application.

If the packet format is the OMCI packet format, a packet structure of the third message/fourth message may be shown in Table 12.

**Table 12 Packet format of the third message/fourth message in the OMCI format**

| **Third message/Fourth message (message of the OLT for notifying the ONU of the hot configuration restoration state) (fixed length)** | | |
|---|---|---|
| Octet | Content | Description |
| 1-2 | Transaction correlation identifier | Message sequence number |
| 3 | Message type | Message type, indicating that the message is used by the OLT to notify the ONU of the hot configuration restoration state |
| 4 | Device identifier | The fixed length is 0xA |
| 5-6 | Entity Id | Used by the OLT to notify the ONU of an ID of an entity of the hot configuration restoration state |
| 7-8 | Instance Id | Used by the OLT to notify the ONU of an ID of an instance that is of the entity and that is of the hot configuration restoration state |
| 9-40 | Message contents | The octet 9 indicates the hot reset upgrade result notified by the OLT to the ONU, where 1 indicates that the hot configuration restoration starts, and 0 indicates that the hot configuration restoration ends; and the octets 10 to 40 are padded with 0s |
| 41-48 | OMCI trailer | OMCI message trailer |

The octet 3 is a configuration manner field in the third message/fourth message, and indicates the hot configuration restoration state. Optionally, the field may be used as a message identifier of the third message/fourth message. In Table 12, a value of the message identifier (the configuration manner field) may be 0, 1, or any value. This is not limited in this application. For example, 1 may indicate the hot configuration restoration state.

For the octets 5 to 8, refer to descriptions of the first message. Details are not described herein again.

The octet 9 is a configuration status field in the third message/fourth message. For example, 1 may indicate that the hot configuration restoration starts, in other words, indicate the ONU to enter the hot configuration restoration state; and 0 may indicate that the hot configuration restoration ends, in other words, indicate the ONU to end the hot configuration restoration state. The configuration status may be indicated in the foregoing indication manner, or may alternatively be indicated in another manner. For example, 0 indicates that the hot configuration restoration starts, and 1 indicates that the hot configuration restoration ends. This is not limited in this application.

Optionally, the first message to the fourth message may alternatively be variable-length OMCI packets. If the first message to the fourth message are in a variable-length OMCI packet format, packet structures of the first message to the fourth message may be shown in Table 13 to 15.

**Table 13 Packet format of the first message in the variable-length OMCI format**

| **First message (message of the OLT for notifying the ONU to perform the hot reset upgrade) (variable length)** | | |
|---|---|---|
| Octet | Content | Description |
| 1-2 | Transaction correlation identifier | Message sequence number |
| 3 | Message type | Message type, indicating that the message is used by the OLT to notify the ONU to perform the hot reset upgrade |
| 4 | Device identifier | The variable length is 0xB |
| 5-6 | Entity Id | Used by the OLT to notify the ONU of an ID of an entity that is to perform the hot reset upgrade |
| 7-8 | Instance Id | Used by the OLT to notify the ONU of an ID of an instance that is of the entity and that is to perform the hot reset upgrade |
| 9-10 | Message Len | Message length, and padded with 1s |
| 11 | Message contents | Not used, and padded with 0 |
| 12-15 | Message integrity check | Message integrity check |

**Table 14 Packet format of the second message in the variable-length OMCI format**

| **Message of the ONU for notifying the OLT that the hot reset upgrade is completed (variable length)** | | |
|---|---|---|
| Octet | Content | Description |
| 1-2 | Transaction correlation identifier | Message sequence number |
| 3 | Message type | Message type, indicating that the message is used by the ONU to notify the OLT of a hot reset upgrade result |
| 4 | Device identifier | The variable length is 0xB |
| 5-6 | Entity Id | Used by the OLT to notify the ONU of the ID of the entity that performs the hot reset upgrade |
| 7-8 | Instance Id | Used by the OLT to notify the ONU of the ID of the instance that is of the entity and that performs the hot reset upgrade |
| 9-10 | Message Len | Message length, and padded with 1s |
| 11 | Message contents | Hot reset upgrade result notified by the ONU to the OLT, where 0 indicates success, and another value indicates failure |
| 12-15 | Message integrity check | Message integrity check |

**Table 15 Packet format of the third message/fourth message in the variable-length OMCI format**

| **Message of the OLT for notifying the ONU of the hot configuration restoration state (variable length)** | | |
|---|---|---|
| Octet | Content | Description |
| 1-2 | Transaction correlation identifier | Message sequence number |
| 3 | Message type | Message type, indicating that the message is used by the OLT to notify the ONU of the hot configuration restoration state |
| 4 | Device identifier | The variable length is 0xB |
| 5-6 | Entity Id | Used by the OLT to notify the ONU of an ID of an entity of the hot configuration restoration state |
| 7-8 | Instance Id | Used by the OLT to notify the ONU of an ID of an instance that is of the entity and that is of the hot configuration restoration state |
| 9-10 | Message Len | Message length, and padded with 1s |
| 11 | Message contents | Hot configuration restoration state result notified by the OLT to the ONU, where 1 indicates that the hot configuration restoration starts, and 0 indicates that the hot configuration restoration ends |
| 12-15 | Message integrity check | Message integrity check |

The foregoing describes the software upgrade method, the packet structure, and the like provided in embodiments of this application. The following describes a structure of a device used to implement the foregoing software upgrade manner.

As shown in FIG. 7, an embodiment of this application further provides an optical network unit 700. The optical network unit 700 includes a processor 710 and a chip 720. The processor 710 is configured to run software, and the software is configured to indicate the chip 720 to implement interaction with a terminal device (for example, the software plays a configuration management role for the interaction between the chip 720 and the terminal device). The optical network unit 700 is configured to perform an action performed by the optical network unit ONU in any embodiment in FIG. 3 to FIG. 6, to implement the software upgrade method in any embodiment in FIG. 3 to FIG. 6.

Optionally, the optical network unit 700 may be an OLT, a master gateway (master ONU) in an FTTR scenario, or the like. This is not limited in this application.

Optionally, the software running on the processor 710 may be ONT software. Optionally, the chip 720 may be a forwarding module, a PON MAC chip, or the like. This is not limited in this application. The forwarding module may be a network processor (network processor, NP) chip, a traffic management (traffic management, TM) module, or the like. This is not limited in this application.

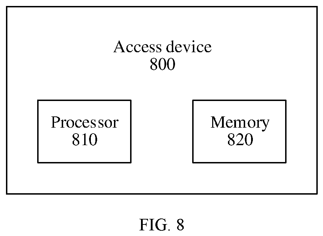

As shown in FIG. 8, an embodiment of this application further provides an access device 800. The access device 800 includes a processor 810 and a memory 820. The processor 810 is configured to perform an action performed by the access device (for example, an OLT) in any embodiment in FIG. 3 to FIG. 6, to implement the software upgrade method in any embodiment in FIG. 3 to FIG. 6.

Optionally, the access device 800 may be an OLT, a master gateway (master ONU) in an FTTR scenario, or the like. This is not limited in this application.

The optical network unit 700 and the access device 800 are used in the network structure shown in FIG. 1, in other words, the communication network provided in embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A software upgrade method, wherein the method is applied to an optical network unit, software and a chip run on the optical network unit, the software indicates the chip to implement interaction with a terminal device, and the method comprises:
receiving a first message, wherein the first message indicates the optical network unit to perform a hot reset upgrade on the software; and
performing the hot reset upgrade on the software based on the first message, and maintaining the interaction between the chip and the terminal device before completing the hot reset upgrade on the software.

2. The method according to claim 1, wherein the first message comprises an upgrade manner field, and the upgrade manner field indicates that an upgrade manner is hot reset upgrade.

3. The method according to claim 1 or 2, wherein after completing the hot reset upgrade on the software, the method further comprises:
sending a second message, wherein the second message indicates a hot reset upgrade result of the software.

4. The method according to claim 3, wherein the second message comprises a message identifier field and an upgrade result field;
the message identifier field indicates the hot reset upgrade result of the software; and
a first value of the upgrade result field indicates that the hot reset upgrade result of the software is success, and a second value of the upgrade result field indicates that the hot reset upgrade result of the software is failure.

5. The method according to any one of claims 1 to 4, wherein after completing the hot reset upgrade on the software, the method further comprises:
receiving a third message, wherein the third message indicates the optical network unit to enter a hot configuration restoration state; and in the hot configuration restoration state, stopping, by the optical network unit, sending configuration data from an access device to the chip.

6. The method according to claim 5, wherein the third message comprises a configuration manner field and a configuration status field;
the configuration manner field indicates the hot configuration restoration state; and
the configuration status field in the third message is a third value, and the third value of the configuration status field indicates the optical network unit to enter the hot configuration restoration state.

7. The method according to claim 5 or 6, wherein after the receiving a third message, the method further comprises:
receiving a fourth message, wherein the fourth message indicates the optical network unit to end the hot configuration restoration state; and
ending the hot configuration restoration state based on the fourth message.

8. The method according to claim 7, wherein the fourth message comprises a configuration manner field and a configuration status field;
the configuration manner field indicates the hot configuration restoration state; and
the configuration status field in the fourth message is a fourth value, and the fourth value of the configuration status field indicates the optical network unit to end the hot configuration restoration state.

9. The method according to claim 7 or 8, wherein the method further comprises:
after ending the hot configuration restoration state, sending the configuration data from the access device to the chip.

10. The method according to any one of claims 7 to 9, wherein after the receiving a fourth message, the method further comprises:
receiving incremental configuration data, and sending the incremental configuration data to the chip, wherein
the incremental configuration data is configuration data cached by the access device in a process of the hot reset upgrade on the software by the optical network unit.

11. The method according to any one of claims 7 to 10, wherein before the performing the hot reset upgrade on the software based on the first message, the method further comprises:
sending target data to a storage module, wherein the target data is data used before the optical network unit performs the hot reset upgrade on the software; and
before the receiving a fourth message, the method further comprises:
receiving the target data from the storage module, and running, based on the target data, hot-reset upgraded software.

12. The method according to any one of claims 1 to 11, wherein the method further comprises:
receiving a software package from the access device; and
obtaining patch data from the software package based on the first message, and performing a patch upgrade on the chip based on the patch data.

13. The method according to any one of claims 1 to 12, wherein the terminal device is a user terminal.

14. A software upgrade method, wherein the method is applied to an access device, and the method comprises:
sending a first message to an optical network unit, wherein the first message indicates the optical network unit to perform a hot reset upgrade on software, the software and a chip run on the optical network unit, and the software indicates the chip to implement interaction with a terminal device; and
maintaining, by the optical network unit, the interaction between the chip and the terminal device before completing the hot reset upgrade on the software.

15. The method according to claim 14, wherein the first message comprises an upgrade manner field, and the upgrade manner field indicates that an upgrade manner is hot reset upgrade.

16. The method according to claim 14 or 15, wherein after the sending a first message to an optical network unit, the method further comprises:
receiving a second message from the optical network unit, wherein the second message indicates a hot reset upgrade result of the software.

17. The method according to claim 16, wherein the second message comprises a message identifier field and an upgrade result field;
the message identifier field indicates the hot reset upgrade result of the software; and
a first value of the upgrade result field indicates that the hot reset upgrade result of the software is success, and a second value of the upgrade result field indicates that the hot reset upgrade result of the software is failure.

18. The method according to claim 16 or 17, wherein the method further comprises:
sending a third message to the optical network unit based on the second message, wherein the third message indicates the optical network unit to enter a hot configuration restoration state; and in the hot configuration restoration state, stopping, by the optical network unit, sending configuration data from the access device to the chip.

19. The method according to claim 18, wherein the third message comprises a configuration manner field and a configuration status field;
the configuration manner field indicates the hot configuration restoration state; and
the configuration status field in the third message is a third value, and the third value of the configuration status field indicates the optical network unit to enter the hot configuration restoration state.

20. The method according to claim 18 or 19, wherein after the sending a third message to the optical network unit, the method further comprises:
sending a fourth message to the optical network unit, wherein the fourth message indicates the optical network unit to end the hot configuration restoration state.

21. The method according to claim 20, wherein the fourth message comprises a configuration manner field and a configuration status field;
the configuration manner field indicates the hot configuration restoration state; and
the configuration status field in the fourth message is a fourth value, and the fourth value of the configuration status field indicates the optical network unit to end the hot configuration restoration state.

22. The method according to claim 20 or 21, wherein after the sending a first message to an optical network unit, the method further comprises:
caching incremental configuration data, wherein the incremental configuration data is configuration data delivered by a network in a process of the hot reset upgrade on the software by the optical network unit; and
after the sending a fourth message to the optical network unit, the method further comprises:
sending the incremental configuration data to the optical network unit.

23. The method according to any one of claims 20 to 22, wherein after the sending a first message to an optical network unit, and before the sending a fourth message to the optical network unit, the method further comprises:
if receiving a configuration change request from a control module, returning an error prompt to the control module, wherein the error prompt indicates that the access device refuses to perform a configuration change.

24. The method according to any one of claims 20 to 23, wherein after the sending a fourth message to the optical network unit, the method further comprises:
if receiving the configuration change request from the control module, performing the configuration change.

25. The method according to any one of claims 14 to 24, wherein the method further comprises:
sending a software package to the optical network unit, wherein the software package comprises patch data, and the patch data is used to perform a patch upgrade on the chip.

26. An optical network unit, comprising a processor and a chip, wherein
the processor is configured to run software, wherein the software indicates the chip to implement interaction with a terminal device; and
the optical network unit is configured to perform the method according to any one of claims 1 to 13.

27. An access device, comprising a processor and a memory, wherein
the processor is configured to perform the method according to any one of claims 14 to 25.

28. A communication network, comprising the optical network unit according to claim 26 and the access device according to claim 27.

29. A computer-readable storage medium, wherein the computer-readable storage medium stores a program; and when a computer executes the program, the method according to any one of claims 1 to 13 or claims 14 to 25 is performed.

30. A computer program product, wherein when the computer program product is executed on a computer, the computer performs the method according to any one of claims 1 to 13 or claims 14 to 25.
